# EUROPÄISCHE PATENTANMELDUNG

(11) **EP 1 243 561 A2**
(43) Veröffentlichungstag der Anmeldung: **25.09.2002**
(21) Anmeldenummer: 02002740.5
(22) Anmeldetag: 07.02.2002
(51) Int. Cl.: C02F 1/72, C02F 1/78

(54) **Verfahren zur Aufbereitung von schadstoffhaltigen Wässern mit Hilfe eines Eisen(III)-Katalysators**

(30) Priorität: 23.03.2001 DE 10114177
(71) Anmelder: Degussa AG, 40474 Düsseldorf (DE)
(72) Erfinder: Hemperl, Dietmar, Prof. Dr., 38302 Wolfenbüttel (DE); Krull, Rainer, Dr., 38116 Braunschweig (DE); Jung, Thomas, 24848 Kropp (DE); Preuss, Andrea, Dr., 63456 Hanau (DE); Raschke, Henning, Dr., 60596 Frankfurt (DE); Sepp, Gerhard, 63801 Kleinostheim (DE); Woyciechowski, Matthias, Dr., 63505 Langenselbold (DE)

(57) **Zusammenfassung**

Die Erfindung betrifft ein Verfahren zur Aufbereitung von schadstoffhaltigen Wässern unter Einsatz einer Quelle für Wasserstoffperoxid und/oder Ozon und eines heterogenen Katalysators. Erfindungsgemäß wird ein Fe(III)-OH-Strukturelement enthaltender Katalysator eingesetzt, insbesondere ein beta-Fe(O)OH enthaltender Katalysator. Die Behandlung erfolgt bevorzugt bei pH 5 bis 9.

## Beschreibung

Die Erfindung richtet sich auf ein Verfahren zur Aufbereitung schadstoffhaltiger Wässer insbesondere Abwässer und umfasst die Behandlung des Wassers mit einer Quelle für Wasserstoffperoxid und/oder Ozon in Gegenwart eines heterogenen Katalysators.

Zur Abwasserreinigung werden die unterschiedlichsten Verfahren und Verfahrenskombinationen eingesetzt, zum Beispiel chemisch-physikalische Verfahren, wie Fällung und Flockung oder adsorptive Verfahren, zum Beispiel mit Aktivkohle, oder Beseitigung von Schadstoffen durch biologischen Abbau oder Oxidation von Schadstoffen mit unterschiedlichen Methoden.

In jüngerer Zeit haben insbesondere jene Technologien Eingang in die Abwasserbehandlung gefunden, in welchen Schadstoffe mit hochreaktiven Hydroxylradikalen, die in unterschiedlicher Weise erzeugt werden können, oxidiert werden. Beispiele für diese Technologien sind die photolytisch, insbesondere UV-induzierte Oxidation, die Oxidation mit Wasserstoffperoxid in Gegenwart eines Eisenkatalysators (Fenton's Reagenz), die Kombinationen H₂O₂/UV sowie Ozon/UV. Neben den zuvor genannten in homogener Phase durchgeführten Abwasserbehandlungen sind auch solche bekannt, in welchen die Oxidation mit Wasserstoffperoxid in Gegenwart eines heterogenen Katalysators erfolgt.

Während unter Verwendung von Wasserstoffperoxid allein viele Schadstoffe nicht befriedigend eliminiert werden können, lässt sich Wasserstoffperoxid in bekannter Weise mittels UV-Licht aktivieren, wobei Hydroxylradikale mit wesentlich höherem Oxidationspotential erzeugt werden. Die strahleninduzierte Aktivierung von Wasserstoffperoxid hat jedoch den wesentlichen Nachteil, dass die Eindringtiefe der Strahlung in den meisten zu behandelnden Abwässern nur gering ist, so dass ein hoher technischer Aufwand betrieben werden muss, um ausreichende Eliminationsraten zu erzielen.

Die Abwasserbehandlung unter Einsatz von Wasserstoffperoxid und gelösten Eisen(II)-Salzen, also Fenton's Reagenz, ist bereits umfassend beschrieben worden. So offenbaren O. Specht, I. Wurdack und D. Wagner in Chemie Ingenieur Technik 9/95, Seiten 1089 - 1090, eine mehrstufige Pilotanlage zur oxidativen Abwasserbehandlung nach dem Fenton-Verfahren. Das Gesamtverfahren ist technisch sehr aufwendig, indem die Anlage sowohl eine Reaktorkaskade, einen Reaktor zur Neutralisation des stark sauren behandelten Wassers sowie eine Kombination aus einem Absetzbehälter und einer Kammerfilterpresse zur Abtrennung des gebildeten Eisenhydroxidniederschlags umfasst.

Gravierende Nachteile des Einsatzes von Fentons Reagenz bei der Abwasserbehandlung folgen auch aus dem Kongressbeitrag von I. Wurdack, C. Höfl, G. Sigl, O. Specht, D. Wabner "Oxidativer Abbau von AOX und CSB in realen Abwässern: Vergleich verschiedener Advanced Oxidation Processes", 3. GVC-Kongreß (14. - 16.10.1996, Würzburg) "Verfahrenstechnik der Abwasser- und Schlammbehandlung", Bericht 9713/131, VDI-Verlag 1996: Die Reaktion läuft hiernach nur bei sehr sauren pH-Werten, nämlich zwischen pH 2 und 3 ab. Das Abwasser muss also zunächst angesäuert und nach der Oxidation mit Fenton's Reagenz wieder neutralisiert werden, bevor es in eine Kläranlage oder einen Vorfluter abgegeben werden kann. Dadurch kommt es zu einer erheblichen Aufsalzung des behandelten Abwassers und zudem entstehen erhebliche Mengen eines schwerlöslichen Eisenhydroxid-Niederschlags, der abgetrennt werden muss. Nachteilig ist auch der sehr hohe H₂O₂-Einsatz, da es während dieser Reaktion zu einem hohen unspezifischen H₂O₂-Verbrauch kommt.

Das EP 0 257 983 A2 lehrt eine oxidative Abwasserbehandlung mit einem sauerstoffhaltigen Gas in Gegenwart eines heterogenen Katalysators, wobei es sich hierbei um eine Kombination aus einem Mischoxid-Katalysator von mindestens zwei Elementen aus der Reihe Titan, Silicium und Zirkon und einer weiteren Katalysatorkomponente, darunter Mangan, Eisen, Kobalt, Nickel, Wolfram, Kupfer, Silber und Edelmetalle, handelt. Nachteilig an diesem Verfahren ist, dass die Abwasserbehandlung bei einer Temperatur im Bereich von 100 bis 370 °C, insbesondere 200 bis 300 °C durchgeführt werden muss. Zwar können zusätzlich zu dem sauerstoffhaltigen Gas auch Ozon oder Wasserstoffperoxid eingesetzt werden, dieses Dokument gibt jedoch keine Anregung in diesem Fall die Behandlung bei einer wesentlich niedrigeren Temperatur durchzuführen.

Die Nachteile des zuvor genannten Verfahrens, sowie die Nachteile der Behandlung schadstoffhaltiger Abwässer unter Verwendung von Fenton's Reagenz, können gemäß DE Offenlegungsschrift 19 925 534 zumindest teilweise dadurch umgangen werden, dass als heterogener Katalysator zur Bildung von Hydroxylradikalen aus Wasserstoffperoxid ein titanhaltiges Silikat, insbesondere ein Titansilikalit verwendet wird. Unter Einsatz eines solchen heterogenen Katalysators wird bei Raumtemperatur oder mäßig erhöhter Temperatur eine Teiloxidation der Schadstoffe in den Abwässern erreicht, wodurch die biologische Abbaubarkeit der Schadstoffe verbessert wird. Nachteilig an diesem Verfahren ist, dass die Aktivität geringer ist als jene der Eisen(II)-Salze in Fenton's Reagenz, so dass der im Abwasser erreichte Eliminationsgrad nur in bestimmten Fällen ausreichend ist. Ein weiterer Nachteil der titanhaltigen Silikate besteht darin, dass diese zunächst pulverförmig vorliegen und somit Vorkehrungen zu ihrer Rückhaltung getroffen werden müssen. Zwar lassen sich diese Katalysatoren auch in Formkörper überführen, jedoch tritt hierbei ein Aktivitätsverlust auf, der die Anwendbarkeit für die Oxidation von Abwasserinhaltsstoffen mit Wasserstoffperoxid einschränkt.

Jörg Hofmann et al. offenbaren in Chemie Ingenieur Technik (71) 4/99,399 - 401 ein ähnliches Verfahren, wobei jedoch als Katalysator ein Ni- und Cu-enthaltender Vollmetallkatalysator in Form eines Gestricks zum Einsatz kommt. Als Oxidationsmittel werden außer Wasserstoffperoxid auch Natriumpercarbonat und Peressigsäure genannt. Die Behandlung des Abwassers erfolgt bei pH 6 - 7. Eine befriedigende Abgabegeschwindigkeit wird nur bei erhöhter Temperatur erzielt.

Aufgabe der vorliegenden Erfindung ist es demgemäß ein weiteres Verfahren zur Behandlung schadstoffhaltiger Wässer, insbesondere Abwässer, aufzuzeigen, das gegenüber dem Verfahren der DE-OS 19 925 534 zu einer höheren Abbaurate führt und gegenüber dem zuletzt gewürdigten Dokument ein etwa gleiches, vorzugsweise aber verbessertes Abbauverhalten zeigt. Gemäß einer weiteren Aufgabe sollte das Verfahren die bekannten Nachteile von Fenton's Reagenz nicht oder zumindest in wesentlich geringerem Umfang aufweisen. Gemäß einer weiteren Aufgabe, welche sich auf bevorzugte Ausführungsformen richtet, sollte sich das Verfahren in einfacher Weise und ohne das Erfordernis einer technisch aufwendigen Anlage durchführen lassen.

Diese Aufgaben sowie weitere Aufgaben, wie sie sich aus der nachfolgenden Beschreibung ergeben, werden durch das in den Patentansprüchen definierte Verfahren gelöst.

Gefunden wurde somit ein Verfahren zur Aufbereitung eines schadstoffhaltigen Wassers, insbesondere Abwassers, das eine Behandlung des Wassers mit einer Quelle für Wasserstoffperoxid und/oder Ozon in Gegenwart eines heterogenen Katalysators umfasst, wobei der Katalysator Fe(III)-OH-Strukturelemente umfasst. Besonders bevorzugt enthält der Katalysator als besonders wirksame Komponente Eisen(III)-Oxidhydrat der allgemeinen Formel Fe(O)OH. Gegenüber der formelmäßigen Zusammensetzung Fe(O)OH kann es sich bei dem Katalysator jedoch auch um ein wasserärmeres oder wasserreicheres Material handeln, solange Fe(III)-OH-Strukturelemente in ausreichender Konzentration zugegen sind. Das erfindungsgemäß bevorzugte Eisen(III)-Oxidhydrat lässt sich in an sich bekannter Weise durch eine Neutralisationsfällung aus einem Eisen(III)-Salz mit nachfolgender Entwässerung herstellen. Vorzugsweise erfolgt die Entwässerung unter Bedingungen, unter welchen das Eisenoxidhydrat in der Beta-Modifikation vorliegt.

Bei dem Katalysator kann es sich auch um Eisen(III)-hydroxid der Formel Fe(OH)₃ oder ein durch teilweise Entwässerung gebildetes Oxidhydrat handeln.

Gemäß einer bevorzugten Ausführungsform wird der Fe(III)-OH-Strukturelemente aufweisende Katalysator also insbesondere Eisen(III)-hydroxid und Eisen(III)-oxidhydrat oder eine Kombination dieser Stoffe in Form von Formlingen eingesetzt. Bei den Formlingen handelt es sich um solche Körper, welche sich zum Einsatz in einer Festbettkolonne eignen. Beispielsweise handelt es sich um Granulate oder Extrudate. Diese Formlinge können außer dem Material mit den Fe(III)-OH-Strukturelementen zusätzlich Bindemittel und/oder andere katalytisch wirksame Komponenten enthalten.

Bei den Bindemitteln für den geformten Katalysator handelt es sich beispielsweise um Kieselsol, gefällte oder pyrogene Kieselsäure, Aluminiumoxid oder Silikate. Der Masseanteil an Bindemitteln liegt üblicherweise im Bereich von 5 bis 30 Gew.-%, bezogen auf den Formkörper. Zur Formgebung kommen alle an sich bekannten Verfahren in Frage. Sofern sich an den Formgebungsprozess jedoch ein Kalzinierungsschritt anschließt, ist dafür Sorge zu tragen, dass Eisen(III)-OH-Strukturelemente und insbesondere beta-Fe(O)OH im Katalysator verbleiben, um eine ausreichende Aktivität zu gewährleisten.

Der erfindungsgemäße Katalysator kann allein oder in Kombination mit anderen katalytisch wirksamen heterogenen Katalysatoren, beispielsweise solchen, wie sie in der DE OS 19 925 534 beschrieben sind, verwendet werden.

Gemäß einer besonderen Ausführungsform des erfindungsgemäßen Verfahrens wird als Katalysator ein synthetisches granuliertes Eisenhydroxid verwendet, dass gewöhnlich als Adsorbens für die Adsorption von Arsen aus Trinkwasser dient (siehe J. Water SRT-Aqua Vol. 47, Nr. 1, Seite 30 - 35 (1998)).

Es war nicht vorhersehbar, dass die erfindungsgemäßen heterogenen Katalysatoren Wasserstoffperoxid außergewöhnlich gut aktivieren, obgleich das Eisen in höherer Oxidationsstufe vorliegt als in Fenton's Reagenz. Bei der Behandlung eines schadstoffhaltigen Wassers wird ein wesentlich höherer Abbaugrad erzielt, als unter Verwendung des vorbekannten heterogenen Katalysators auf der Basis eines titanhaltigen Silikats.

Wässer unterschiedlichster Herkunft, insbesondere Abwässer und Kreislauf- oder Prozesswässer, die mit dem erfindungsgemäßen Verfahren behandelt werden können, sind solche, die oxidierbare organische oder auch anorganische Verbindungen enthalten. Besonders vorteilhaft ist das erfindungsgemäße Verfahren dann, wenn die Abwasserinhaltsstoffe nicht leicht biologisch abbaubar sind. Behandelbar sind also neben kommunalen Abwässern auch Abwässer und Kreislaufwässer aus der chemischen und pharmazeutischen Industrie, wie CKW- und phenolhaltige Wässer, aus der metallverarbeitenden und Erdölindustrie, mit organischen Stoffen verunreinigte Grundwässer, Deponiesickerwässer, gefärbte Abwässer der Textil- und Druckindustrie und Abwässer der wasserlackverarbeitenden Industrie, Krankenhausabwässer sowie Abwässer aus Abluftwäschern. Bei den behandelbaren Schadstoffen handelt es sich vornehmlich um unterschiedlich substituierte aliphatische, cycloaliphatische und aromatische organische Verbindungen, wie z.B. schwefelhaltige organische Substanzen mit Mercapto- oder Sulfo-Funktionen, Carbonsäuren, Amide, Amine, aliphatische Kohlenwasserstoffe, ein- und mehrkernige aromatische und heteroaromatische Verbindungen, halogenierte, insbesondere chlorierte aliphatische und aromatische Verbindungen, homound heterozyklische Cycloaliphaten, sowie wasserlösliche oder emulgierte Polymere und Copolymere. Durch das erfindungsgemäße Verfahren werden die in dem zu behandelnden Wasser enthaltenen Schadstoffe zumindest teilweise, überwiegend aber in einem sehr hohen Grad zu solchen Abbauprodukten oxidiert, welche in einfacher Weise biologisch weiter abgebaut werden können.

Da in vielen Fällen, insbesondere bei nicht schwer biologisch abbaubaren Abwässern, die vorhandenen Schadstoffe nicht vollständig bekannt und / oder auch nicht identifizierbar sind, werden zur Charakterisierung der Abwässer Summenparameter, wie der Chemische Sauerstoffbedarf (CSB, bestimmt nach DIN ISO 6060 bzw. DIN 38409/41) oder der gesamte organische Kohlenstoff (total organic carbon, TOC, nach EN 1484) herangezogen. Das erfindungsgemäße Verfahren hat daher zunächst eine gewisse Reduktion des enthaltenen CSB oder des TOC sowie auch eine Verbesserung der biologischen Abbaubarkeit zum Ziel, wie sie in Standardtests nach DIN EN 29 888 (Zahn-Wellens-Verfahren) gemessen wird. Durch die Teiloxidation von enthaltenen Schadstoffen kann außerdem die Hemmung der Nitrifikation herabgesetzt oder aufgehoben werden, die nach einer Standardmethode der Degussa SOP UT-001 bestimmt wird.

Die Konzentration der Abwasserinhaltsstoffe kann in weiten Bereichen liegen, beispielsweise im Bereich von wenigen mg CSB pro 1 bis zu 100 g CSB pro 1; meistens liegt der Schadstoffgehalt im Bereich von 0,1 bis 20 g CSB pro 1 Wasser.

Das erfindungsgemäße Verfahren wird unter milden Reaktionsbedingungen durchgeführt. Der pH-Wert der Abwässer liegt zu Beginn oberhalb 3, also bei einem Wert oberhalb des pH-Werts, der für eine Oxidation unter Einsatz von Fenton's Reagenz erforderlich ist. Vorzugsweise liegt der pH-Wert im erfindungsgemäßen Verfahren im Bereich von 3 bis 9, insbesondere im Bereich von 5 bis 9. Ein pH-Wert im Bereich von oberhalb 6 bis 8 wird bevorzugt, weil hierdurch eine Eisenelution aus dem erfindungsgemäßen heterogenen Katalysator weitgehend vermieden wird, zumindest aber auf einem tolerablen niedrigen Niveau gehalten werden kann. Um eine nennenswerte Eisenelution zu vermeiden, ist es in kontinuierlichen Betrieben zweckmäßig, den pH-Wert zu kontrollieren und zu regulieren und im Falle eines zu sauren Abwassers den pH-Wert entsprechend anzuheben.

Das erfindungsgemäße Verfahren wird bei einer Temperatur oberhalb des Gefrierpunktes des zu behandelnden Wassers durchgeführt, besonders zweckmäßig ist eine Behandlung im Temperaturbereich von 10 bis 50 °C, insbesondere 15 bis 40 °C.

Als Oxidationsmittel wird im erfindungsgemäßen Verfahren eine Quelle für Wasserstoffperoxid eingesetzt. Geeignete Quellen für Wasserstoffperoxid sind wässrige Lösungen von Wasserstoffperoxid, deren H₂O₂-Konzentration in weiten Grenzen liegen kann. Je nach den Betriebsbedingungen wird im allgemeinen eine H₂O₂-Konzentration im Bereich von 10 bis 70 Gew.-% eingesetzt, insbesondere 30 bis 50 Gew.-%. Weitere Quellen für Wasserstoffperoxid sind Persalze wie Natriumpercarbonat und Natriumperborat, wobei Natriumpercarbonat bevorzugt wird, da dieses in wässriger Lösung außer H₂O₂ auch Natrium- und Carbonationen freisetzt, wodurch gleichzeitig der pH-Wert des zu behandelnden Wassers angehoben wird. Eine weitere Quelle für Wasserstoffperoxid ist Peressigsäure, insbesondere eine sogenannte Gleichgewichtsperessigsäure, welche außer Peressigsäure auch Wasserstoffperoxid enthält; Peressigsäure ist ein stärkeres Oxidationsmittel als Wasserstoffperoxid allein.

Die Einsatzmenge an Wasserstoffperoxid beziehungsweise einer anderen Quelle für Wasserstoffperoxid richtet sich nach dem Gehalt an im Wasser enthaltenen Schadstoffen und deren Abbaubarkeit. Ein Maß für die Schadstoffe ist der sogenannte CSB-Wert (chemischer Sauerstoffbedarf). Im allgemeinen wird pro g zu eliminierendem CSB Aktiv-Sauerstoff in Form einer Quelle für H₂O₂, insbesondere H₂O₂, und/oder Ozon in einer Menge im Bereich von 0,1 bis 25 g, insbesondere 0,5 bis 5 g eingesetzt. Es wurde festgestellt, dass im erfindungsgemäßen Verfahren in vielen Fällen ein Aktivsauerstoffeinsatz von 0,5 bis weniger als 1,5 g pro g CSB ausreicht, während bei diesen Fällen unter Verwendung von Fenton's Reagenz eine höhere Einsatzmenge Aktivsauerstoff nötig ist. Als Alternative zu Wasserstoffperoxid oder einer anderen Quelle für Wasserstoffperoxid kann im erfindungsgemäßem Verfahren auch Wasserstoffperoxid in Verbindung mit der Quelle für Ozon eingesetzt werden. Die Einsatzmenge an Ozon wird wegen des gegenüber H₂O₂ höheren Oxidationspotentials in der Regel niedriger gehalten.

Der Fe(III)-OH-Strukturelemente aufweisende erfindungsgemäße Katalysator kann in Pulverform eingesetzt werden. Die Wasserbehandlung erfolgt in diesem Fall in solchen Vorrichtungen, welche zur Handhabung von Suspensionen geeignet sind. Die Katalysatoreinsatzmenge liegt hierbei im allgemeinen im Bereich von 0,05 bis 100 g/l, vorzugsweise 0,5 bis 10 g/l des zu behandelnden Wassers. Vorzugsweise wird jedoch der Katalysator als Formkörper wie Granulat, Extrudat oder Kugeln eingesetzt.

Zum Schadstoffabbau wird das Wasser in Gegenwart des erfindungsgemäßen Katalysators mit einer Quelle für Wasserstoffperoxid und/oder Ozon in Kontakt gebracht. Die Behandlungsdauer richtet sich nach der Menge und Art der im Wasser enthaltenen Schadstoffe. Der Fachmann wird durch orientierende Versuche die für seinen Zweck optimale Einsatzkonzentration des Oxidationsmittels sowie Behandlungsdauer, welche üblicherweise im Bereich von wenigen Minuten bis zu mehreren Stunden liegt, bestimmen.

Die verfahrenstechnische Realisierung des erfindungsgemäßen Verfahrens kann bei kontinuierlicher oder absatzweiser Fahrweise in einem üblichen Suspensionsreaktor erfolgen und umfasst Maßnahmen zur Abtrennung des Katalysators. Beispielsweise kann der Katalysator nach Abschluss der Reaktion in einem Sedimenter sedimentiert oder mittels einer Fest-Flüssig-Trennvorrichtung von dem behandelten Wasser abgetrennt werden. Sofern der Suspensionskatalysator in Form von leicht handhabbaren Partikeln eingesetzt wird, eignen sich zur Abtrennung einfache Sedimentationsverfahren, wohingegen bei einem Einsatz von feinpulvrigem Katalysator dieser mittels eines üblichen Filtrationsverfahrens abgetrennt wird. Gemäß einer bevorzugten Ausführungsform, welches sich insbesondere beim Einsatz eines pulverförmigen Katalysators eignet, wird ein Suspensionsreaktor, beispielsweise ein kontinuierlich durchströmter oder batchweise beaufschlagter Blasensäulenreaktor, mit einer Crossflow-Filtration kombiniert. Bei der Crossflow-Filtration strömt die Suspension an einer porösen Fläche, insbesondere einer als Membran ausgebildeten Fläche vorbei, und durch Anlegen einer Druckdifferenz zwischen der Überström- und Permeatseite strömt ein Teil der Lösung durch die poröse Fläche/Membran quer zur Strömungsrichtung der Suspension. Die Querstrom-Filtration ist der Fachwelt bekannt - beispielhaft wird auf den Übersichtsartikel von S. Ripperger in Chem.-Ing.-Tech. 60 (1988) Seiten 155 bis 161 verwiesen.

Gemäß einer besonders bevorzugten Ausführungsform des erfindungsgemäßen Verfahrens erfolgt die erfindungsgemäße Behandlung des schadstoffhaltigen Wassers unter Einsatz eines geformten Katalysators in einem Festbettreaktor. Hierbei wird das Katalysatorbett kontinuierlich mit dem zu behandelnden Wasser, welchem vor und/oder innerhalb des Reaktors an ein oder mehreren Stellen die Quelle für Wasserstoffperoxid zudosiert wird, durchströmt. Der Festbettreaktor kann sowohl in geflutetem Zustand als Blasenreaktor oder als Rieselbettreaktor betrieben werden. Geringe Katalysatorverluste durch Abrieb und/oder durch Elution von Eisenverbindung, welche mit dem behandelten Wasser ausgetragen werden, können in der Regel toleriert werden, da es sich hierbei um Verbindungen handelt, welche in der Abwassertechnologie in großem Umfang Einsatz finden.

Sofern die Behandlung des Wassers in einem Festbettreaktor unter Einsatz von Ozon als Oxidationsmittel erfolgt, kann letzteres im Gleichstrom oder Gegenstrom zu dem zu behandelnden Wasser geführt werden.

Sofern die Wasserbehandlung unter Verwendung von Ozon in einem Blasensäulenreaktor erfolgt, in welchem der Katalysator in Form einer Wirbelschicht suspendiert ist, wird der Reaktor mit Ozon begast. Wie bereits dargelegt ist es auch möglich, das zu behandelnde Wasser mit einer Quelle für Wasserstoffperoxid zu versetzen und zusätzlich eine Begasung mit Ozon als Oxidationsmittel vorzunehmen.

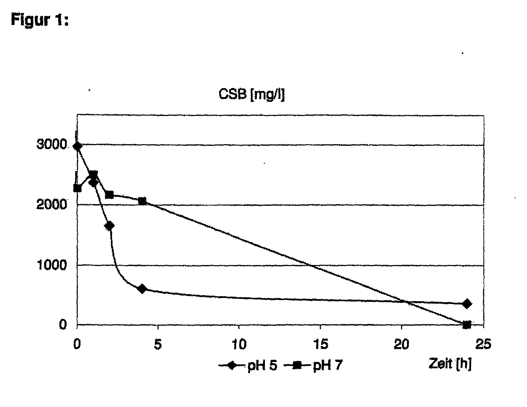

Das erfindungsgemäße Verfahren wird anhand der Figuren 1 bis 3 sowie den nachfolgenden Beispielen näher erläutert.

Figur 1 zeigt ein Diagramm der erfindungsgemäßen Behandlung eines 2-Chlorphenol enthaltenden Wassers in Gegenwart von granuliertem Eisenhydroxid. In den in Figur 1 sowie den Figuren 2 und 3 dargestellten Beispielen wurde ein Fe(OH)₃enthaltendes schwachkristallisiertes beta-Fe(O)OH eingesetzt. Die beiden Kurven der Figur 1 zeigen, dass der CSB-Abbau bei pH 5 rascher verläuft als bei pH 7, andererseits wird bei pH 7 ein niedrigerer Endwert erzielt.

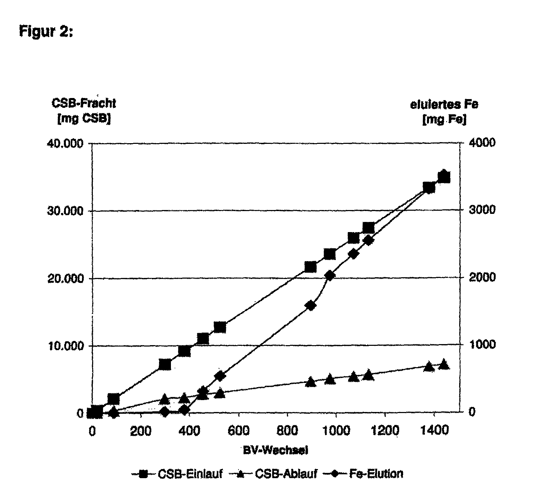

Figur 2 zeigt die Oxidation eines 3-Chlorbenzoat enthaltenden Wassers unter Einsatz eines Festbettreaktors, der mit granuliertem Eisenhydroxid gefüllt ist, wobei das Festbett mit dem zu behandelnden Wasser, dem zuvor Wasserstoffperoxid zugesetzt wurde, berieselt wird. Die Kurven zeigen, dass auch nach über 1400-fachem Austausch des Bettvolumens der CSB-Abbaugrad im wesentlichen konstant bleibt. Figur 2 zeigt auch die Fe-Elution: während zunächst praktisch kein Eisen eluiert wird, stellt sich danach eine im wesentlichen konstante, der eingetragenen CSB-Fracht proportionale Fe-Elution ein.

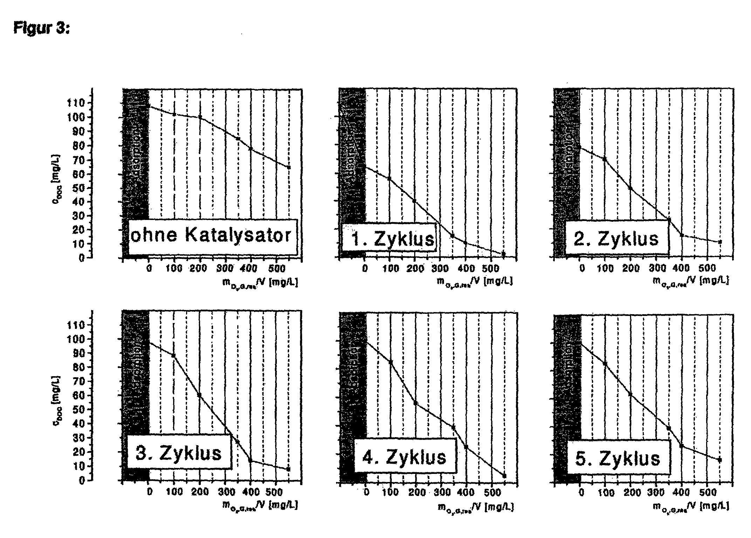

Figur 3 zeigt die Oxidation von 3-Chlorbenzoat enthaltendem Wasser mit Ozon und Wasserstoffperoxid als Oxidationsmittel und granuliertem Eisenhydroxid als Katalysator. Der Abbaugrad betrug stets mehr als 80 %.

Das erfindungsgemäße Verfahren weist gegenüber anderen heterogen katalysierten oxidativen Abwasserbehandlungsverfahren und gegenüber der Oxidation mit Fenton's Reagenz eine Reihe von Vorteilen auf, darunter:
- Das Verfahren ist einfach durchführbar;
- es erfordert im allgemeinen keine technisch aufwendigen Apparaturen;
- es führt zu einem hohen Abbaugrad - ein Abbaugrad des CSB um 60 - 90 % ist problemlos zu erreichen;
- es erfordert kein Ansäuern des zu behandelnden Wassers und damit auch keine Neutralisationsstufe, so dass zu keiner zusätzlichen Aufsalzung kommt;
- die Katalysatorabtrennung, sofern erforderlich, ist einfach realisierbar;
- die Behandlung kann in Festbett- und Wirbelbettreaktoren unter milden Temperatur- und pH-Bedingungen durchgeführt werden;
- eine nachträgliche Ausfällung von gegebenenfalls eluiertem Eisen ist in der Regel nicht nötig;
- der Katalysator ist sehr effektiv und leicht zugänglich, weist eine hohe Standzeit auf.

### Beispiel 1:

In einem temperierten Suspensionsreaktor wurden 2,5 l eines Modellabwassers mit 1050 mg/l 2-Chlorphenol (entspricht einem CSB von 2500 mg/l) vorgelegt und auf die Starttemperatur (siehe unten, 30°C oder 60°C) erwärmt. Dann wurden 2 g/l eines granulierten Eisen(III)hydroxids, das Fe(OH)₃ und Fe(O)OH in etwa gleicher Menge und eine freie Feuchte um 50 Gew-% enthielt (Firma GEH, Osnabrück), und Wasserstoffperoxid in einer Stöchiometrie von 1,6 bezogen auf den CSB-Ausgangswert zugegeben. Der pH-Wert des Modellabwassers wurde auf pH 5 bzw. pH 7 eingestellt, das Modellabwasser wurde nicht gepuffert. Analysiert wurde der Rest-CSB nach verschiedenen Reaktionszeiten.

Bei pH 7 war eine nahezu vollständige Oxidation des CSB's in 24 Stunden zu beobachten, bei pH 5 wurden 70-80% des CSB's bereits in den ersten 4 Stunden oxidiert. Während dieser 4 Stunden wurde eine Eisenfreisetzung von etwa 10% beobachtet.

Die Ergebnisse des Beispiels 1 sind in Figur 1 graphisch dargestellt.

### Beispiel 2:

Eine Glassäule wurde mit etwa 80 g granuliertem Eisenhydroxid gemäß Beispiel 1 gefüllt (Bettvolumen ca. 76 cm³) und bei Raumtemperatur kontinuierlich mit einem Modellabwasser mit ca. 100 mg/l 3-Chlorbenzoat (entsprechend einem CSB 320 mg/l) von oben berieselt. Der pH-Wert wurde nicht eingestellt, das Modellabwasser hatte einen pH-Wert von 6-7. Wasserstoffperoxid wurde dem Modellabwasser in einer Konzentration von etwa 1,0 g/l zugesetzt. Über eine Laufzeit von ca. 1400 Bettvolumenwechsel wurde kein Durchbruch des CSBs beobachtet. Der Oxidationsgrad betrug über die Laufzeit durchgängig etwa 80%. Während der Behandlung kam es nur zu einer geringen, im wesentlichen zur behandelten Abwassermenge proportionalen Elution von Eisen.

Die Ergebnisse des Beispiels 2 sind in Figur 2 graphisch dargestellt.

### Beispiel 3:

Untersucht wurde der kombinierte Einsatz von Ozon und Wasserstoffperoxid in Gegenwart von geformtem Eisen(III)hydroxid-Eisen(III)oxidhydrat-Katalysator. Dazu wurden 400 ml Modellabwasser in einer Blasensäule mit 3-Chlorbenzoesäure in einer Menge entsprechend einem gelösten organsichen Kohlenstoff (DOC) von 108 mg/l
(DOC = dissolued organic carbon) und mit 30 g/l Katalysator versetzt und 15 Minuten mit Luft begast und anschließend der gelöste organische Kohlenstoff (DOC) bestimmt. Anschließend wurde 15 Minuten mit 0,67 g O₃ / Minute ozonisiert und zusätzlich über eine Schlauchpumpe proportional zum Ozonmassenstrom Wasserstoffperoxid als 10%ige Lösung mit einer Rate von 0,2 g H₂O₂ / Minute in den Reaktor dosiert. Zu unterschiedlichen Zeitpunkten wurde der DOC bestimmt und über die bis zu diesem Zeitpunkt verbrauchte Ozonmenge aufgetragen. Danach wurde die Lösung abgegossen und der zurückgewonnene Katalysator wiederum mit einer frischen 3-Chlorbenzoat-Lösung versetzt. Dieser Zyklus wurde viermal wiederholt.
Die Ergebnisse der erfindungsgemäßen 5 Zyklen sowie zum Vergleich ein Versuch in Abwesenheit des Katalysators sind in Figur 3 graphisch dargestellt.

Die Zugabe des Katalysators verbesserte den erreichbaren Oxidationsgrad deutlich - was durch die Steigerung der Elimination von etwa 40 % auf etwa 84 bis 98 % ersichtlich ist.

## Patentansprüche

1. Verfahren zur Aufbereitung eines schadstoffhaltigen Wassers, insbesondere Abwasser, umfassend Behandlung des Wassers mit einer Quelle für Wasserstoffperoxid und / oder Ozon in Gegenwart eines heterogenen Katalysators,
**dadurch gekennzeichnet,**
**dass** man einen Fe(III)-OH Strukturelemente enthaltenden Katalysator verwendet.

2. Verfahren nach Anspruch 1,
**dadurch gekennzeichnet,**
**dass** man einen Fe(O)OH enthaltenden Katalysator verwendet.

3. Verfahren nach Anspruch 1 oder 2,
**dadurch gekennzeichnet,**
**dass** man ein durch Neutralisationsfällung aus einem Fe(III)-Salz mit nachfolgender Entwässerung hergestelltes β FeOOH als Katalysator verwendet.

4. Verfahren nach einem der Ansprüche 1 bis 3,
**dadurch gekennzeichnet,**
**dass** man den Katalysator in Form von Formlingen, insbesondere in granulierter Form einsetzt.

5. Verfahren nach einem der Ansprüche 1 bis 4,
**dadurch gekennzeichnet,**
**dass** man die Behandlung bei einem pH-Wert im Bereich von 3 bis 9, insbesondere 5 bis 9 durchführt.

6. Verfahren nach einem der Ansprüche 1 bis 5,
**dadurch gekennzeichnet,**
**dass** man Aktiv-Sauerstoff in Form von H₂O₂ und/oder Ozon im Bereich von 0,1 bis 25 g pro g zu eliminierendem CSB einsetzt.

7. Verfahren nach einem der Ansprüche 1 bis 6,
**dadurch gekennzeichnet,**
**dass** man die Behandlung bei einer Temperatur im Bereich von 10 bis 50°C durchführt, indem man das Wasser in Blasen- oder Rieselbettfahrweise über einen mit dem Katalysator befüllten Festbettreaktor leitet und (a) Wasserstoffperoxid oder eine Quelle hierfür kontinuierlich oder periodisch dem unbehandelten oder teilweise behandelten Wasser zufügt oder (b) das zu behandelnde Wasser und/oder den Reaktor mit Ozon begast oder (c) eine Kombination aus Wasserstoffperoxid-Zugabe und Ozonbegasung wählt.

8. Verfahren nach der Ansprüche 1 bis 7,
**dadurch gekennzeichnet,**
**dass** man die Behandlung in Gegenwart eines suspendierten Katalysators durchführt und behandeltes Wasser mittels einer Vorrichtung zur Crossflow-Filtration von der Suspension abtrennt.
